# EUROPÄISCHE PATENTSCHRIFT

(11) **EP 3 270 017 B1**
(45) Veröffentlichungstag und Bekanntmachung des Hinweises auf die Patenterteilung: **04.11.2020**
(21) Anmeldenummer: 17000884.1
(22) Anmeldetag: 24.05.2017
(51) Int. Cl.: F16K 1/52, B05C 5/02, F16K 31/06

(54) **VENTIL FÜR FLIESSFÄHIGE MEDIEN, INSBESONDERE LEIMVENTIL**
VALVE FOR FLOWABLE MEDIA, IN PARTICULAR GLUE VALVE
VANNE POUR LIQUIDES, EN PARTICULIER VANNE À COLLE

(30) Priorität: 06.06.2016 DE 102016006785
(43) Veröffentlichungstag der Anmeldung: 17.01.2018
(60) Teilanmeldung: 20190060.2
(73) Patentinhaber: Focke & Co. (GmbH & Co. KG), 27283 Verden (DE)
(72) Erfinder: Walter, Jan-Christian, 21073 Hamburg (DE); Stegen, Marc-Daniel, 22143 Hamburg (DE)
(74) Vertreter: Aulich, Martin

(56) Entgegenhaltungen:
- DE-A1- 3 742 414
- DE-A1-102008 022 851
- DE-A1-102014 001 897
- US-A1- 2006 169 936

## Beschreibung

Die Erfindung betrifft ein Ventil für fließfähige Medien mit den Merkmalen des Oberbegriffs des Anspruchs 1.

Derartige Ventile sind in der Regel aus einer Vielzahl von Komponenten aufgebaut. Ein besonderes Problem besteht darin, bei der Herstellung eines solchen Ventils das Anschlagteil der Ventilhubeinstelleinheit, die Anordnung der auf dem Spulenträger sitzenden Spule sowie die Anordnung des Verschlussorgans optimal zueinander auszurichten. Auch Fertigungstoleranzen erschweren dies. Ungenaue Ausrichtungen dieser Komponenten führen allerdings zu nicht optimalem Verhalten des jeweiligen Ventils.

Weiter ist nachteilig, dass Änderungen der axialen Stellung des Anschlagteils durch Rotation des Einstellmittels in der Regel auch zu einer Änderung der Drehlage des insofern mitrotierenden Anschlagteils führen. Wenn das Anschlagteil nicht exakt rotationssymmetrisch um eine Längsmittelachse ausgebildet ist, können hierdurch ungewollte Nebenwirkungen entstehen. Beispielsweise in einem Fall, in dem einzelne Dauermagneten an dem Anschlagteil angebracht sind, die mit Dauermagneten an dem Verschlussorgan zur Aufbringung einer Schließkraft zusammenwirken, kann eine solche Änderung der Drehlage des Anschlagteils gegebenenfalls zu einem veränderten Magnetfeld und entsprechend zu einer veränderten Schließkraft führen.

Die DE 37 42 414 A zeigt ein Ventil mit einem Spulenträger, der in einem Gehäuse angeordnet ist. Das Gehäuse weist am unteren Ende eine Dosierbohrung auf. Ein Dosierröhrchen, das teilweise in den Bereich des Spulenträgers hineinragt, ist im unteren Bereich des Gehäuses befestigt und mündet in die Dosierbohrung.

Die US 2006/169936 A1 zeigt ein Ventil mit einem Antriebsteil und einem Ventilteil. Das Antriebsteil umfasst einen Spulenträger in einem Gehäuse und eine Schraube zum Anpassen des Ventilhubs. Das Ventilteil ist unterhalb des Spulenträgers an dem Gehäuse angeordnet und weist einen Ventilsitz und ein Verschlussorgan auf.

Die DE 10 2014 001 897 A1 offenbart ein Ventil gemäß dem Oberbegriff des Anspruchs 1 und zeigt eine Ventilanordnung mit Einzelmodulen, die jeweils eine Ventileinheit aufweisen. Die Ventileinheit umfasst ein Gehäuse mit einem Spulenträger, in dem ein Verschlussorgan angeordnet ist, und einen Ventildüse, die unterhalb des Spulenträgers an dem Gehäuse befestigt ist und eine Dosieröffnung aufweist.

Es ist Aufgabe der vorliegenden Erfindung, die eingangs genannten Ventile weiterzuentwickeln.

Diese Aufgabe wird gelöst durch ein Ventil mit den Merkmalen des Anspruchs 1.

Ein erfindungsgemäßes Ventil für fließfähige Medien mit den Merkmalen des Anspruchs 1 umfasst danach ein Ventilgehäuse und ein in diesem durch einen Elektro-Magneten bewegbares Verschlussorgan, insbesondere einen Ventilstößel, das mit einem Verschlussstück in Schließstellung des Ventils an einem Ventilsitz anliegt und das mindestens teilweise in einem insbesondere durchgehenden Innenraum eines einstückig ausgebildeten Spulenträgers sitzt, auf dem die Windungen einer Spule des Elektro-Magneten aufgewickelt sind. Weiter umfasst es eine Ventilhubeinstelleinheit mit einem mindestens abschnittsweise in dem Innenraum des Spulenträgers angeordneten, länglichen, eine Bewegung des Verschlussorgans in Richtung der Ventilhubeinstelleinheit begrenzenden Anschlagteil. Die Ventilhubeinstelleinheit ist an dem Spulenträger befestigt. Erfindungsgemäß nimmt der Spulenträger eine zentrale Rolle bzw. Stellung in dem Ventil ein. Die Befestigung der Ventilhubstelleinheit an dem Spulenträger führt unter anderem dazu, dass die Ventilhubstelleinheit und insbesondere das Anschlagteil einerseits und das Verschlussorgan andererseits, das sich während des Betriebs des Ventils in dem Innenraum des Spulenträgers bewegt, bereits während des Ventilzusammenbaus in fest vorgegebener Relativstellung zueinander befinden bzw. geeignet und dauerhaft zueinander ausgerichtet sind. Bei den Ventilen des Standes der Technik dagegen ist dies nicht der Fall. Dort ist die Ventilhubeinstelleinheit regelmäßig mit einem separaten Gehäuseteil verbunden.

Vorzugsweise verfügt die Ventilhubeinstelleinheit über einen mit einem ortsfesten Ventilbauteil verbundenen Anschlagteilträger, an dem das Anschlagteil befestigt ist. Der Anschlagteilträger kann beispielsweise ein Einstellmittel der Ventilhubeinstelleinheit sein, etwa eine Einstellschraube, das unmittelbar mit dem (ortsfesten) Spulenträger verbunden ist, insbesondere verschraubt. Das Einstellmittel als Anschlagträger kann aber auch über ein zusätzliches Verbindungsbauteil, etwa eine Mutter, mit dem Spulenträger verbunden bzw. verschraubt sein.

Was den Spulenträger betrifft, so weist dieser einen Spulenabschnitt auf, auf den die Spule aufgewickelt ist, sowie einen sich daran anschließenden (oberen) Kopfabschnitt mit einer (endständigen) Aufnahme für die Ventilhubeinstelleinheit. Die Aufnahme kann dann entsprechend mit einem Gewinde versehen sein, sodass der oben erwähnte Anschlagteilträger/das Verbindungsteil in dieses eingeschraubt werden kann bzw. eingeschraubt ist.

Bevorzugt umgegeben der Spulenabschnitt und der Kopfabschnitt des Spulenträgers den Innenraum desselben (abschnittsweise) seitlich bzw. schließen diesen ein.

In weiterer Ausbildung dieses Gedankens kann dann die oben erwähnte (endständige) Aufnahme des Spulenträgers für die Ventilhubeinstelleinheit durch einen von dem Kopfabschnitt umgebenen Endabschnitt des Spulenträgerinnenraums und durch den diesen Endabschnitt umgebenen Wandungsabschnitt des Kopfabschnitts gebildet sein.

In dem Kopfabschnitt des Spulenträgers befindet sich ein an dessen Außenseite beginnender, bis zum Innenraum des Spulenträgers verlaufender Mediumzufuhrkanal, durch den dem Innenraum das durch das Ventil auszugebene Medium zuführbar ist. Was die Ausbildung des Innenraums des Spulenträgers betrifft, so kann er im Bereich des Kopfabschnitts größere Querabmessungen aufweisen als im Bereich des Spulenabschnitts.

Bevorzugt ist der Spulenträger aus einem metallischen Werkstoff mit hoher Wärmeleitfähigkeit gefertigt.

Das Verschlussorgan und der Ventilsitz sind Teil einer Dosiereinheit, die - wie die Ventilhubeinstelleinheit - ebenfalls an dem Spulenträger befestigt ist, insbesondere lösbar befestigt, bevorzugt mittels einer Schraubverbindung. Daher befinden sich nicht nur die die Ventilhubeinstelleinheit und das Verschlussorgan bereits während des Ventilzusammenbaus in fest vorgegebener Relativstellung zueinander und sind dauerhaft zueinander ausgerichtet, sondern zusätzlich noch die Dosiereinheit bzw. insbesondere das Verschlussorgan, das Teil derselben ist.

Insbesondere können der Spulenträger, die Ventilhubeinstelleinheit und die Dosiereinheit derart ausgebildet und zueinander ausgerichtet sein, dass das Anschlagteil der Ventilhubeinstelleinheit und das Verschlussorgan der Dosiereinheit mittig in dem Innenraum des Spulenträgers sowie aufeinanderfolgend entlang einer gemeinsamen (Längsmittel-)Achse positioniert sind.

Weiter ist das Verschlussorgan vorzugsweise durch eine bzw. die (hohlzylindrische) Wandung des Spulenabschnitts des Spulenträgers in dem Innenraum in axialer Richtung geführt.

Bevorzugt sind der von der Aufnahme für die Ventilhubeinstelleinheit umgebene Innenraumabschnitt des Spulenträgers, der von dem Spulenabschnitt umgebene Innenraumabschnitt desselben und dessen von der Aufnahme für die Dosiereinheit umgebener Innenraumabschnitt entlang einer gemeinsamen (Längsmittel-)Achse angeordnet.

Die Dosiereinheit kann zweckmäßigerweise noch eine den Ventilsitz bildende Düse umfassen.

Der Innenraum des Spulenträgers kann an eine mindestens bereichsweise von dem Ventilsitz der Dosiereinheit umgebenen Ventilkammer der Dosiereinheit anschließen bzw. in diese münden.

Weiter weist der Spulenträger bevorzugt einen Fußabschnitt mit einer (endständigen) Aufnahme für die Dosiereinheit auf, mit der die Dosiereinheit insbesondere lösbar verbunden ist, insbesondere verschraubt, bevorzugt mittels eines Befestigungsteils der Dosiereinheit, wie etwa einer (Überwurf-)Mutter.

Der Fußabschnitt ist dann vorzugsweise an einem Ende des Spulenträgers angeordnet, der Kopfabschnitt am anderen bzw. entgegengesetzten Ende desselben.

Ein erfindungsgemäßes Ventil für fließfähige Medien entsprechend Anspruch 16 umfasst ein Ventilgehäuse, ein in einem Ventilinnenraum durch einen Elektro-Magneten bewegbares Verschlussorgan, insbesondere Ventilstößel, das mit einem Verschlussstück in Schließstellung des Ventils an einem Ventilsitz anliegt, und eine Ventilhubeinstelleinheit zur Einstellung des Ventilhubs, die ein mindestens abschnittsweise in dem Ventilinnenraum angeordnetes, längliches, in seiner axialen Stellung in dem Ventilinnenraum durch Rotation eines Einstellmittels der Ventilhubeeinstelleinheit veränderbares Anschlagteil umfasst, das die Bewegung des Verschlussorgans in Richtung der Ventilhubeinstelleinheit begrenzt. Es ist dadurch gekennzeichnet, dass die Ventilhubeinstelleinheit derart ausgebildet ist, dass das Anschlagteil bei Rotation des Einstellmittels nur axial bewegt wird, ohne dass das Anschlagteil mitrotiert.

Hierdurch wird erreicht, dass die Drehlage des Anschlagteils bei einer axialen Bewegung desselben unverändert bleibt. Die aus einer veränderten Drehlage ansonsten im Stand der Technik ggf. entstehenden Nachteile, vgl. die Erläuterungen weiter oben, werden hierdurch wirksam vermieden.

Ein solches Ventil kann zusätzlich ein, mehrere oder sämtliche der zuvor genannten Merkmale des Ventils gemäß Anspruch 1 sowie ein, mehrere oder sämtliche Merkmale aller bevorzugter Weiterbildungen in dieser Anmeldung in Alleinstellung oder jeder sinnvollen Kombination desselben aufweisen. Insbesondere kann es auch den oben spezifizierten Spulenträger als zentrales Bauteil aufweisen, muss es aber nicht.

Was konkret das Einstellmittel betrifft, so kann es insbesondere um seine Längsmittelachse drehbar mit dem Anschlagteil verbunden sein.

Dabei ist die drehbare Verbindung des Einstellmittels bevorzugt derart ausgebildet, dass das Anschlagteil bezogen auf Axialbewegungen des Einstellmittels (bzw. bezogen auf Bewegungen des Einstellmittels auf das Verschlussorgan zu bzw. von diesem weg) mit diesem zwangsgekoppelt ist.

In weiterer Ausbildung dieser Gedanken verfügt das Einstellmittel über ein Außengewinde, mit dem es in ein Bewegungsgewinde einer Aufnahme für das Einstellmittel eingeschraubt ist, und über einen drehfest mit diesem verbundenen Zapfen, der drehbar in einem länglichen, insbesondere zylindrischen Hohlraum einer insbesondere einstückig mit dem Anschlagteil drehfest verbundenen Zapfenaufnahme gelagert ist. Der Zapfen ist dabei in der Zapfenaufnahme gegen axiale Relativbewegungen zwischen Zapfen und Zapfenaufnahme gesichert, insbesondere durch eine Formschlussverbindung zwischen Zapfen und Zapfenaufnahme.

Das Einstellmittel kann bevorzugt eine Einstellschraube sein.

Was das Anschlagteil betrifft, so ist es an einem ortfesten Bauteil des Ventils drehsicher, aber in Axialrichtung bewegbar gelagert, insbesondere durch Reibschlussverbindung, bevorzugt durch einen Dichtungsring zwischen dem Anschlagteil und dem ortsfesten Bauteil.

Das ortsfeste Bauteil des Ventils, an dem das Anschlagteil drehsicher, aber in Axialrichtung bewegbar gelagert ist, kann dabei ein oder der oben erwähnte Spulenträger für die Spule des Elektro-Magneten sein, auf dem die Windungen einer Spule des Elektro-Magneten aufgewickelt sind, oder ggf. ein oder das oben bereits erwähnte Verbindungsbauteil, das in eine bzw. die Aufnahme des Spulenträgers für die Ventilhubeinstelleinheit eingesetzt ist.

An dem bevorzugt einstückig ausgebildeten Spulenträger des Ventils, auf dem die Windungen einer Spule des Elektro-Magneten aufgewickelt sind, könnte (auch) die Ventilhubeinstelleinheit befestigt sein.

Der Spulenträger könnte - wie weiter oben bereits beschrieben - einen Spulenabschnitt aufweisen, auf den die Spule aufgewickelt ist, sowie einen sich daran anschließenden Kopfabschnitt mit einer (endständigen) Aufnahme für die Ventilhubeinstelleinheit.

In weiterer Ausbildung der Erfindung verfügt das Anschlagteil an seinem dem Verschlussorgan zugekehrten Ende über mindestens einen der Dauermagneten, der mit mindestens einem gleichgerichteten Dauermagneten des Verschlussorgans an dessen dem Anschlagteil zugekehrten Ende derart zusammenwirkt, dass die Magnete in Schließstellung des Verschlussorgans eine Schließkraft auf das Verschlussorgan ausüben.

Weitere Merkmale der vorliegenden Erfindung ergeben sich aus den beigefügten Patentansprüchen, der nachfolgenden Beschreibung eines bevorzugten Ausführungsbeispiels der Erfindung sowie aus den beigefügten Zeichnungen.

### Darin zeigt:

- Fig. 1: eine Ventilanordnung aus mehreren erfindungsgemäßen Einzelventilen in Draufsicht,
- Fig. 2: einen Schnitt entlang der Schnittlinie II-II in Fig. 1,

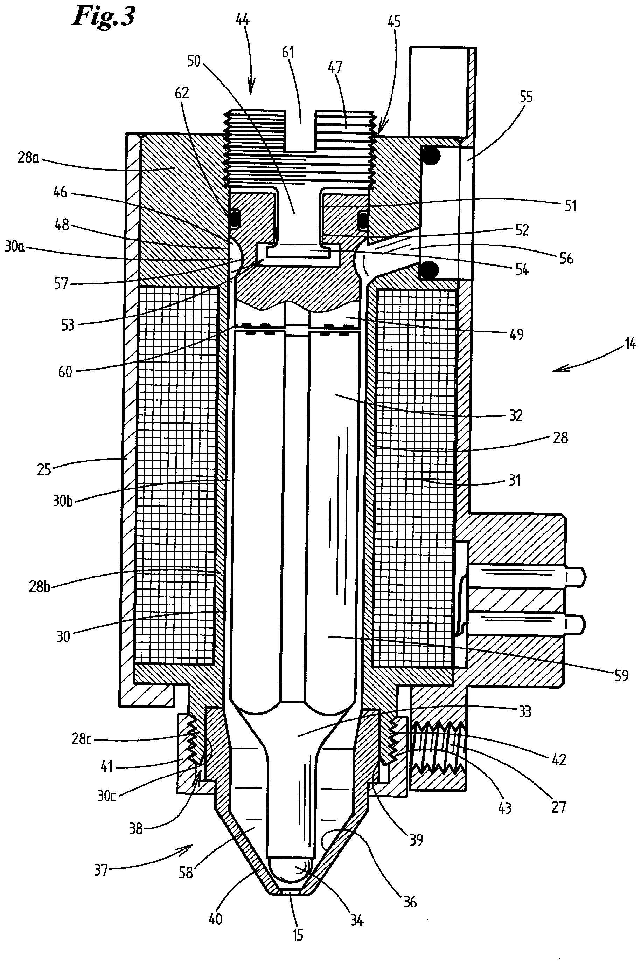

- Fig. 3: die Einzelheit III aus Fig. 2 in vergrößerter Darstellung.

Nachfolgend werden Details erfindungsgemäßer (Magnet-)Ventile 14 erläutert. Vorliegend sind diese Ventile 14 Teil einer Ventilanordnung 10 mit mehreren Einzelventilen 14. Es versteht sich aber, dass die Erfindung auch Einzelventile bzw. einzeln betriebene Ventile außerhalb einer solchen Anordnung 10 umfassen kann.

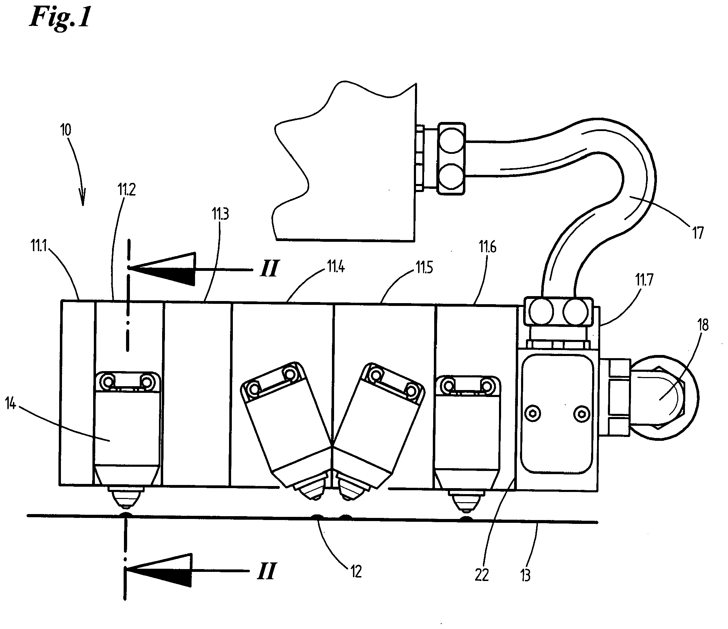

Die in Fig. 1 gezeigte Ventilanordnung 10 bzw. Einrichtung zum Auftragen von fließfähigen Medien auf Oberflächen ist aus mehreren Einzelmodulen 11.1-11.7 aufgebaut. Im Rahmen der Anmeldung wird die Gesamtheit dieser Einzelmodule vereinfachend mit 11.1-11.7 bezeichnet. Eine ähnliche Ventilanordnung ist auch in der DE 10 2014 001 897 A1 offenbart, deren Inhalt hiermit integriert wird.

In dem gezeigten Ausführungsbeispiel dient die Ventilanordnung 10 zum (mehrbahnigen) Auftragen von Leim, insbesondere Heißleim, auf Oberflächen von bei der Herstellung von Zigarettenpackungen eingesetzten Zuschnitten oder Materialbahnen auf Papier, Folie oder dergleichen. Es liegt aber natürlich auch im Rahmen der Erfindung, mit der Ventilanordnung 10 andere fluide oder fließfähige Medien, wie etwa Farben, Lacke oder dergleichen, auf Oberflächen von Gegenständen anderer Art aufzutragen.

Mit den Ventilen 14 der Ventilanordnung 10 werden jeweils einzelne (kleine) Medium- bzw. Leimportionen 12 auf beispielsweise einen Zuschnitt 13 aufgebracht. Die Einzelmodule 11.1-11.7 sind vorliegend in Längserstreckung der Ventilanordnung 10 aufeinanderfolgend in einer gemeinsamen Reihe angeordnet. Dabei sind jeweils Paare von zwei benachbarten Einzelmodulen 11.1-11.7 lösbar miteinander verbunden. Vorliegend mittels in (durchgehenden) Schraubenlöchern 63 angeordneten Schrauben.

Einige Einzelmodule, nämlich die Einzelmodule 11.2, 11.4-11.6 weisen jeweils ein Ventil bzw. eine Ventileinheit 14 auf mit jeweiliger (unterer) Ausgabe- bzw. Dosieröffnung 15. Über diese Einzelmodule 11.2, 11.4-11.6 mit jeweiliger Ventileinheit 14, nämlich über die jeweilige Dosieröffnung 15 derselben, wird das fließfähige Medium im Prozess auf die Oberfläche des Zuschnitts 12 aufgebracht.

Das Einzelmodul 11.7 dient zum Anschluss der Ventilanordnung 10 an insbesondere von der übergeordneten (Verpackungs-)Maschine, insbesondere der Maschinensteuerung, kommende Stromversorgungsleitungen und gegebenenfalls zusätzliche Steuerleitungen 16. Die Leitungen 16 sind vorliegend im Inneren eines Kabelschlauchs 17 geführt. Ausgehend von dem Modul 11.7 werden die Leitungen 16 durch die Ventilanordnung 10 zu den einzelnen Modulen 11.2, 11.4-11.6 mit Ventileinheit 14 geführt.

Das Modul 11.7 dient des Weiteren zum Anschluss der Ventilanordnung 10 an eine Mediumquelle, etwa ein Heißleimtankgerät. Zu diesem Zweck endet ein entsprechender, vorliegend beheizter Mediumschlauch 18 an dem Einzelmodul 11.7. Von dem Einzelmodul 11.7 aus wird das über den Schlauch 18 geführte Medium im Inneren der Ventilanordnung 10 verteilt und zu den einzelnen Modulen 11.2, 11.4-11.6 mit Ventileinheit 14 geführt. Das Einzelmodul 11.7 dient auch zum Anschluss an bevorzugte, ebenfalls von der Mediumquelle bzw. einem Steuergerät desselben kommenden Steuerungsleitungen (nicht dargestellt). Auch diese Steuerungsleitungen sind zu den einzelnen Modulen 11.2, 11.4-11.6 mit Ventileinheit 14 geführt.

Bei den Modulen 11.1, 11.3 handelt es sich um Zwischenmodule, mit der insbesondere die Gesamtbreite der Ventilanordnung 10 beeinflusst werden kann. Zusätzlich kann vorgesehen sein, dass die Ventileinheiten 14, wie in Fig. 1 erkennbar ist, winklig zueinander angeordnet werden und dabei insbesondere seitliche Fasen am jeweiligen Gehäuse aufweisen, um den Spurabstand zwischen benachbarten Ventileinheiten 14 zu verringern.

Jedes Einzelmodul 11.1-11.7 verfügt über einen Grundkörper 19. Die einzelnen Grundkörper 19 weisen jeweils an mindestens einer (Außen-)Seite eine Flanschfläche auf, an der dann jeweils eine entsprechende Flanschfläche des Grundkörpers 19 eines bzw. des in der gemeinsamen Reihe benachbarten Einzelmoduls 11.1-11.7 anliegt. Mit Ausnahme des Abschlussmoduls 11.1 weisen sämtliche anderen Grundkörper 19 der Einzelmodule 11.2-11.7 jeweils einen vorliegend bevorzugt parallel zur Längserstreckung der Ventilanordnung 10 verlaufenden Mediumhauptkanal 20 auf. Jedenfalls die Mediumhauptkanäle 20 derjenigen Einzelmodule 11.1-11.7, bei denen in der Reihe der Einzelmodule 11.1-11.7 jeweils an zwei Seiten andere Einzelmodule angrenzen, erstrecken sich durchgehend von der einen (Außen-)Seite mit Flanschfläche zur anderen (Außen-)Seite mit Flanschfläche. Die einzelnen Mediumhauptkanäle 20 der Grundkörper 19 der einzelnen Module 11.2-11.7 schließen dabei jeweils, insbesondere fluchtend, aneinander an, sodass sich insgesamt ein durchgehender Kanal ergibt, der sich von dem Grundkörper 19 des Moduls 11.2 bis zum Grundkörper 19 des Moduls 11.7 erstreckt.

Die Grundkörper 19 der Einzelmodule 11.2, 11.4-11.6 mit Ventileinheit 14 verfügen des Weiteren jeweils über einen von dem jeweiligen Hauptkanal 20 abgehenden Mediumzweigkanal 21. Die Zweigkanäle 21 sind dabei jeweils bis zu einer Befestigungs(außen)seite 22 des jeweiligen Grundkörpers 19 geführt. An jeder Befestigungsseite 22 ist (lösbar) die jeweilige Ventileinheit 14 befestigt. Neben dem Mediumhauptkanal 20 verfügen die Grundkörper 19 der Einzelmodule 11.2-11.7 darüber hinaus jeweils über mindestens einen, bevorzugt parallel zu dem jeweiligen Mediumhauptkanal 20 verlaufenden Kabelkanal 23.

Durch den Kabelkanal 23 sind zum einen die Strom- und gegebenenfalls Steuerungsleitungen 16 für die Ventileinheiten 14 geführt, wobei die Grundkörper 19 der entsprechenden Einzelmodule 11.2, 11.4-11.6 zusätzlich jeweils über einen von dem jeweiligen Kabelkanal 23 abgehenden Kabelzweigkanal 24 verfügen, durch den durch den Kabelkanal 23 geführte Leitungen 16 weiter bis zu den Ventileinheiten 14 geführt sind. Zum anderen sind gegebenenfalls noch nicht gezeigte Stromleitungen für Heizorgane durch den Kabelkanal 23 geführt. Die Kabelkanäle 23 der einzelnen Module fluchten dabei in ähnlicher Weise wie die Mediumhauptkanäle 20 und bilden in ebenfalls ähnlicher Weise einen durchgehenden Kanal.

Was die Ventileinheiten 14 betrifft, so handelt es sich vorliegend um elektrisch betriebene (Elektro-)Magnetventile. Die Ventileinheiten 14 weisen jeweils ein Gehäuse 25 auf. Jede Ventileinheit 14 ist mit dem jeweiligen Grundkörper 19 - wie oben bereits angedeutet - lösbar verbunden, beispielsweise durch Schrauben 26, die in eine entsprechende Bohrung 27 der Ventileinheit 14 eingreifen.

Besonders wichtig ist der Aufbau des jeweiligen Ventils bzw. der jeweiligen Ventileinheit 14. Innerhalb des Gehäuses 25 ist als zentrales Bauteil des (jeweiligen) Ventils 14 ein insbesondere als spanend bearbeitetes Drehteil ausgebildeter Spulenträger 28 angeordnet.

Der Spulenträger 28 ist vorliegend einstückig ausgebildet, bevorzugt aus Metall, kann aber auch grundsätzlich mehrteilig sein.

Der Spulenträger 28 verfügt über einen von einer jeweiligen Wandung desselben umschlossenen, vorliegend durchgehenden, länglichen und aufrechten Innenraum bzw. Hohlraum (mittige Öffnung) 30. Der Innenraum 30 ist vorliegend im Wesentlichen hohlzylindrisch ausgebildet. Sowohl der Spulenträger 28 als auch entsprechend der von ihm umschlossene Innenraum 30 verfügen über mehrere Teilabschnitte.

Nämlich der Spulenträger 28 an seinem einen Ende einen (oberen) Kopfabschnitt 28a, einen sich an diesen anschließenden (mittleren) Spulen(trag)abschnitt 28b sowie an seinem anderen Ende einen sich an den Spulenabschnitt 28b anschließenden (unteren) Fußabschnitt 28c. Die jeweiligen Abschnitte 28a, 28b, 28c umschließen jeweils einen ihnen zugeordneten Teilabschnitt 30a, 30b bzw. 30c des Innenraums 30. Dabei weist der Innenraum 30a im Bereich des Kopfabschnitts 28a größere Querabmessungen auf als im Bereich des Spulenabschnitts 28b bzw. als der von dem Spulenabschnitt umgebene Innenraum 30b.

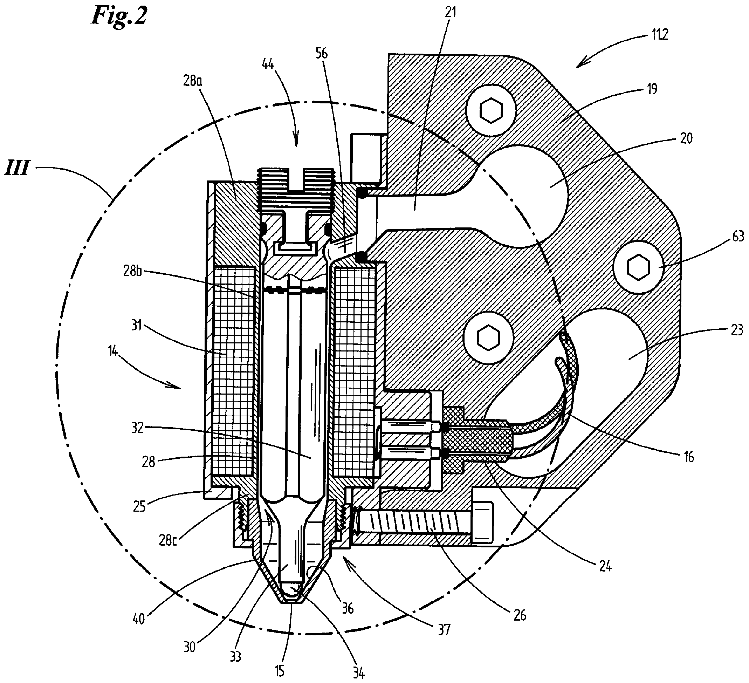

An der Außenseite des Spulenabschnitts 28b sind die Windungen eines oder mehrerer, elektrisch betriebener Spulen 31 eines bzw. des Elektro-Magneten des Ventils 14 aufgewickelt. Zu der jeweiligen Spule führen die in Fig. 2 dargestellten Strom(versorgungs)leitungen 16, über die die Spule 31 mit Betriebsstrom versorgt werden kann.

In dem Innenraum 30 des Spulenträgers 28, genauer gesagt, im Inneren des Elektro-Magneten bzw. der Spule 31 ist als Kern bzw. Anker des Elektro-Magneten ein Verschluss- bzw. Dosierorgan 32 bewegbar angeordnet, im vorliegenden Fall ein Ventilstößel.

An einem unteren Schaft 33 des Verschlussorgans 32 ist ein Verschlussmittel bzw. ein Verschlussstück 34 angeordnet, vorliegend eine Kugel. Das Verschlussmittel 34 ist der Ventil- oder Dosieröffnung 15 des Ventils 14 zugeordnet. Die Ventilöffnung 15 befindet sich mittig im Bereich eines trichterförmigen Ventilsitzes 36. Das Verschlussmittel 34 liegt dabei in Schließstellung des Ventils 14 an vorliegend konischen Sitzflächen des Ventilsitzes 36 an.

Das Verschlussorgan 32 und der Ventilsitz 36 sind Teil einer Dosiereinheit 37. Die Dosiereinheit 37 ist lösbar an dem Spulenträger 28 befestigt. Konkret ist sie mit einer endständigen Aufnahme 38 für die Dosiereinheit 37 des Fußabschnitts 28c des Spulenträgers 28 verbunden.

Die Aufnahme 38 für die Dosiereinheit 37 umfasst am freien Ende des Fußabschnitts 28c des Spulenträgers 28 eine durch einen Endabschnitt des Innenraums 30 des Spulenträgers 28 gebildete bzw. eine durch einen entsprechenden Endabschnitt des Fußabschnitts 28c umgebene Öffnung 39. Die Dosiereinheit 37, konkret im vorliegenden Fall ein den Ventilsitz 36 aufweisendes Düsenteil (Düse) 40, sitzt in der Aufnahme 38 bzw. der Öffnung 39.

Mit dem Düsenteil 40 fest verbunden ist ein Befestigungsteil 41, vorliegende eine (Überwurf-)Mutter, das lösbar mit einer (hohlzylindrischen) Aufnahmewandung 42 der Aufnahme 38 des Spulenträgers 28 bzw. des Fußabschnitts 28c desselben verbunden ist. Die Aufnahmewandung 42 weist im vorliegenden Fall zu diesem Zweck ein Gewinde 43 auf, das mit einem entsprechenden Gegengewinde des Befestigungsteils 41 verschraubt ist.

Im Bereich des Kopfabschnitts 28a des Spulenträgers 28 ist eine Ventilhubeinstelleinheit 44 angeordnet. Diese ist mit einer endständigen Aufnahme 45 für die Einstelleinheit 44 des Kopfabschnitts 28a des Spulenträgers 28 verbunden.

Die Aufnahme 45 für die Ventilhubeinstelleinheit 44 umfasst in diesem Fall am freien Ende des Kopfabschnitts 28a des Spulenträgers 28 eine durch einen Endabschnitt des Innenraums 30 des Spulenträgers 28 gebildete bzw. eine von einem entsprechenden Endabschnitt des Kopfabschnitts 28a umgebene Öffnung 46. Die Ventilhubeinstelleinheit 44, im vorliegenden Fall ein Einstellmittel 47 desselben, sitzt dabei in der Aufnahme 45 bzw. der Öffnung 46.

Konkret ist die Ventilhubeinstelleinheit 44 mit der Aufnahme 45 des Kopfabschnitts 28a des Spulenträgers 28 verschraubt bzw. mit einer Wandung 48 der Aufnahme 45.

Dazu ist das Einstellmittel 47, vorliegend eine Einstellschraube, außen mit einem Bewegungsgewinde versehen. Ein entsprechendes Gegengewinde ist innenseitig in der entsprechenden, durch den Kopfabschnitt 28a gebildeten Aufnahmewandung 48 angeordnet.

Das Einstellmittel 47 verfügt endseitig (am oberen Ende) über eine Ausnehmung 61 oder über ein Ansatzstück 61, an der bzw. an dem ein Werkzeug angesetzt werden kann, bspw. ein Innensechskantschlüssel. Durch einen Werker bewirkte Drehungen des Einstellmittels 47 um dessen Längsmittelachse bewirken dann eine axiale Bewegung des Einstellmittels 47 entweder nach oben oder nach unten, das heißt entweder in Richtung des Endes des Ventils 14, an dem die Dosieröffnung bzw. die Dosiereinheit 37 angeordnet ist - Dosierende -, oder in die entsprechende entgegengesetzte Richtung. Mit Hilfe des Einstellmittels 47 kann auf diese Weise ein mit diesem verbundenes Anschlagteil 49 der Ventilhubeinstelleinheit 44 axial in dem Innenraum 30 in Richtung des Dosierendes oder in die entgegengesetzte Richtung bewegt werden.

Die Ventilhubeinstelleinheit 44 ist dabei in besonderer Weise derart ausgebildet, dass bei Drehung des Einstellmittels 47 keine Mitrotation des Anschlagteils 49 erfolgt. Mit anderen Worten bleibt dabei die Drehlage des Anschlagteils 49 relativ zur Axialen bzw. zur Längsmittelachse des Innenraums 30 unverändert.

Hierfür ist das Einstellmittel 47 drehbar mit dem Anschlagteil 49 verbunden, wobei es bezogen auf Axialbewegungen des Einstellmittels 47 mit diesen zwangsgekoppelt ist. Diese Zwangskopplung wird vorliegend erreicht, in dem das Einstellmittel 47 über einen drehfest, insbesondere einstückig mit diesem verbundenen Zapfen 50 verfügt, der drehbar in einem länglichen, insbesondere zylindrischen Hohlraum bzw. Innenraum 51 einer insbesondere einstückig mit dem Anschlagteil 49 drehfest verbundenen Zapfenaufnahme 52 gelagert ist. Der Zapfen 50 ist dabei gegen axiale Relativbewegung zwischen Zapfen 50 und Zapfenaufnahme 52 gesichert. Nämlich vorliegend durch eine Formschlussverbindung 53 zwischen Zapfen 50 und Zapfenaufnahme 52. Konkret weist der Zapfen 50 an seinem freien Ende einen Ansatz 54 mit einem im Vergleich zum Hohlraum 51 größeren Durchmesser auf.

Sollten trotz der drehbaren Lagerung des Einstellmittels 47 an dem Anschlagteil 49 bei Drehung des Einstellmittels 47 noch Drehkräfte auf das Anschlagteil 49 übertragen werden, so verhindert ein Dichtungsring 62 zwischen Anschlagteil 49 und der Innenseite der angrenzenden Wandung 48 des Kopfabschnitts 28a des Spulenträgers 28 eine Rotation des Anschlagteils 49 durch entgegengerichtete Reibungskräfte.

Wie oben bereits erwähnt ist der Spulenträger 28 ein zentrales Bauteil des Ventils 14. Er erstreckt sich letztlich fast durch das gesamte Ventil 14 (dies muss aber nicht so sein). Sowohl die Dosiereinheit 37 als auch die Ventilhubeinstelleinheit 44 sind an dem Spulenträger 28 befestigt und das Verschlussorgan 32 in diesem bewegbar gelagert.

Dabei sind das Anschlagteil 49 der Ventilhubeinstelleinheit 44 und das Verschlussorgan 32 der Dosiereinheit 37 mittig in dem Innenraum 30 des Spulenträgers 28 sowie aufeinanderfolgend entlang einer gemeinsamen (Längsmittel-)Achse positioniert. Das Verschlussorgan 32 ist durch eine bzw. die (hohlzylindrische) Wandung des Spulenabschnitts 28b des Spulenträgers 28 in dem Innenraum 30 in axialer Richtung geführt.

Der von der Aufnahme 45 für die Ventilhubeinstelleinheit 44 umgebene Innenraumabschnitt 30a des Spulenträgers 28, der von dem Spulenabschnitt 28b umgebene Innenraumabschnitt 30b desselben und dessen von der Aufnahme 38 für die Dosiereinheit 37 umgebene Innenraumabschnitt 30c sind entlang einer gemeinsamen (Längsmittel-)Achse angeordnet.

Die vorgenannten Maßnahmen führen letztlich zu einer hervorragenden und dauerhaften Ausrichtung der vorgenannten Bauteile zueinander. Diese stellt sich - anders als im Stand der Technik - konzeptbedingt quasi automatisch ein, da es beim Zusammenbau bzw. der Montage des Ventils 14 letztlich zu einer Selbstzentrierung bzw. Selbstausrichtung der einzelnen, vorgenannten Bauteile kommt. Toleranzketten, wie sie insbesondere auftreten, wenn ein mehrteiliges Ventilgehäuse eingesetzt wird, an dessen einzelnen Gehäuseteilen die vorgenannten Bauteile befestigt sind, werden wirksam verhindert.

Was die Mediumzufuhr betrifft, so wird dem Ventil 14 das zu verarbeitende Medium (beispielsweise Leim oder ein anderes Fluid) über einen Mediumanschluss 55 zugeführt. Dabei gelangt das Medium über einen in dem Kopfabschnitt 28a des Spulenträgers 28 angeordneten, von der Außenseite des Kopfabschnitts 28a bis zum Innenraum 30 führenden Mediumkanal 56 im oberen Bereich des Leimventils 14 in den Innenraum 30 des Leimventils 14.

Im vorliegenden Fall gelangt es in den Bereich des Innenraums 30, in dem sich das Anschlagteil 49 befindet. Dieses weist für einen guten Mediumfluss daher in dem Bereich, in dem der Mediumkanal in den Innenraum 30 mündet bzw. dort, wo dieser endet, an der Außenseite oder Außenkontur eine insbesondere umlaufende, nach innen gerichtete Vertiefung oder Wölbung auf.

Im Betrieb fließt das Medium dann aus dem oberen Bereich des Innenraums 30 bzw. dem von dem Kopfabschnitt 28a begrenzten Innenraumteilabschnitt 30a in den Innenraum 30 nach unten entlang des Verschlussorgans 32 in Richtung der Dosieröffnung 15 und zwar in eine von dem Düsenteil 40 bzw. dem Ventilsitz 36 begrenzte Ventilkammer 58.

Aus der Ventilkammer 58 kann das Medium dann durch geeignete Bewegung des Verschlussorgans 32 durch Freigabe der Ausgabe- bzw. Dosieröffnung 15 gesteuert aus dem Ventil 14 herausgeführt werden bzw. herausfließen. Zu diesem Zweck wird das Verschlussorgan 32 durch geeignete Beaufschlagung des Elektro-Magneten mit elektrischem Strom unter Aufbringung einer Öffnungskraft gegen eine das Verschlussorgan 32 in den Ventilsitz drückende Rückholkraft in Richtung des Anschlagteils 49 bewegt, sodass das Medium aus der Ventilkammer 58 austreten kann. Zu diesem Zweck umgibt die Spule 31 des Elektro-Magneten das Verschlussorgan 32 zumindest abschnittsweise. Das Verschlussorgan 32, bevorzugt ein magnetisierbares, in der Regel metallisches Kolbenstück 59 desselben, wirkt - wie oben bereits angedeutet - innerhalb der Spule 31 als Kern des Elektromagneten.

Das Verschlussorgan 32 ist vorzugsweise permanent in Schließrichtung beaufschlagt von einer Schließkraft eines Schließmittels bzw. Schließorgans. Dieses ist in dem vorliegenden Ausführungsbeispiel als ein zwei Einzelmagnete umfassender Dauermagnet ausgebildet, der eine permanente (abstoßende) Magnetkraft auf das Verschlussorgan 32 ausübt. Natürlich können auch andere, geeignete Schließkräfte ausübende Schließmittel verwendet werden, etwa Rückholfedern oder dergleichen.

Einer der Einzelmagnete des Dauermagneten ist bevorzugt am freien Ende 60 des Anschlagteils 49 angeordnet, der insofern auch als Magnethalter dient, und dessen axiale Stellung relativ zu dem Verschlussorgan 32 bzw. dessen axialer Abstand zu dem Verschlussorgan 32 in der oben bereits beschriebenen Weise eingestellt/beeinflusst werden kann.

Die gegenüberliegenden Einzelmagnete sind so positioniert, dass gleiche Pole einander zugekehrt sind, sodass eine abstoßende Kraft auf das Verschlussorgan 32 übertragen wird, nämlich die oben bereits erwähnte Schließkraft.

Das Anschlagteil 49 bildet dabei, wie oben bereits angedeutet, zusammen mit den Einzelmagneten einen einstellbaren Hubbegrenzer für das Verschlussorgan 32, der die Länge des Weges begrenzt, um den das Verschlussorgan 32 während der Öffnungsbewegung in dem Innenraum 30 maximal nach oben bewegt werden kann.

### Bezugszeichenliste:

| | | | |
|---|---|---|---|
| 10 | Ventilanordnung | 31 | Spule |
| 11.1 | Einzelmodul | 32 | Verschlussorgan |
| 11.2 | Einzelmodul | 33 | Schaft |
| 11.3 | Einzelmodul | 34 | Verschlussmittel |
| 11.4 | Einzelmodul | 36 | Ventilsitz |
| 11.5 | Einzelmodul | 37 | Dosiereinheit |
| 11.6 | Einzelmodul | 38 | Aufnahme für Dosiereinheit |
| 11.7 | Einzelmodul | 39 | Öffnung der Aufnahme |
| 12 | Medium- bzw. Leimportionen | 40 | Düsenteil |
| 13 | Zuschnitt | 41 | Befestigungsteil |
| 14 | Ventileinheit | 42 | Aufnahmewandung |
| 15 | Ausgabe- bzw. Dosieröffnung | 43 | Gewinde |
| 16 | Steuerleitungen | 44 | Ventilhubeinstelleinheit |
| 17 | Kabelschlauch | 45 | Aufnahme für Hubstelleinheit |
| 18 | Mediumschlauch | 46 | Öffnung der Aufnahme |
| 19 | Grundkörper | 47 | Einstellmittel |
| 20 | Mediumhauptkanal | 48 | Aufnahmewandung |
| 21 | Mediumzweigkanal | 49 | Anschlagteil |
| 22 | Befestigungs(außen)seite | 50 | Zapfen |
| 23 | Kabelkanal | 51 | Hohlraum |
| 24 | Kabelzweigkanal | 52 | Zapfenaufnahme |
| 25 | Gehäuse | 53 | Formschlussverbindung |
| 26 | Schrauben | 54 | Ansatz |
| 27 | Bohrung | 55 | Mediumanschluss |
| 28 | Spulenträger | 56 | Mediumkanal in Kopfabschnitt |
| 28a | Kopfabschnitt | 57 | Ringkanal |
| 28b | Spulenabschnitt | 58 | Ventilkammer |
| 28c | Fußabschnitt | 59 | Kolbenstück |
| 30 | Innenraum | 60 | Freies Ende Anschlagteil |
| 30a | Innraumteilabschnitt | 61 | Ausnehmung |
| 30b | Innraumteilabschnitt | 62 | Dichtungsring |
| 30c | Innraumteilabschnitt | 63 | Schraubenlöcher |

## Patentansprüche

1. Ventil für fließfähige Medien, insbesondere Leimventil, mit einem Ventilgehäuse (25) und einem in diesem durch einen Elektro-Magneten bewegbaren Verschlussorgan (32), insbesondere Ventilstößel, das mit einem Verschlussstück in Schließstellung des Ventils (14) an einem Ventilsitz anliegt und das mindestens teilweise in einem insbesondere durchgehenden Innenraum (30) eines Spulenträgers (28) sitzt, auf dem die Windungen einer Spule (31) des Elektro-Magneten aufgewickelt sind, und mit einer Ventilhubeinstelleinheit (44) mit einem mindestens abschnittsweise in dem Innenraum (30) des Spulenträgers (28) angeordneten, länglichen, eine Bewegung des Verschlussorgans (30) in Richtung der Ventilhubeinstelleinheit (44) begrenzenden Anschlagteil (49), wobei die Ventilhubeinstelleinheit (44) an dem Spulenträger (28) befestigt ist, wobei der Spulenträger (28) einen Spulenabschnitt (28b) aufweist, auf den die Spule (31) aufgewickelt ist, sowie einen sich daran anschließenden Kopfabschnitt (28a) mit einer Aufnahme (45) für die Ventilhubeinstelleinheit (44), wobei sich in dem Kopfabschnitt (28a) des Spulenträgers (28) ein an dessen Außenseite beginnender, bis zum Innenraum (20) des Spulenträgers (28) verlaufender Mediumzufuhrkanal (56) befindet, durch den dem Innenraum (30) das durch das Ventil (14) auszugebene Medium zuführbar ist, **dadurch gekennzeichnet, dass** der Spulenträger (28) einstückig ausgebildet ist, und dass das Verschlussorgan (32) und der Ventilsitz (36) Teil einer Dosiereinheit (37) sind, die an dem Spulenträger (28) befestigt ist, insbesondere lösbar an dem Spulenträger (28) befestigt ist, bevorzugt mittels einer Schraubverbindung.

2. Ventil gemäß Anspruch 1, **dadurch gekennzeichnet, dass** die Ventilhubeinstelleinheit (44) über einen mit einem ortsfesten Ventilbauteil verbundenen Anschlagteilträger verfügt, an dem das Anschlagteil (49) befestigt ist.

3. Ventil gemäß Anspruch 1 oder 2, **dadurch gekennzeichnet, dass** der Spulenabschnitt (28b) und der Kopfabschnitt (28a) den Innenraum (30) des Spulenträgers (28) seitlich umgeben bzw. einschließen.

4. Ventil gemäß einem oder mehreren der vorhergehenden Ansprüche, **dadurch gekennzeichnet, dass** die (endständige) Aufnahme (45) für die Ventilhubeinstelleinheit (44) durch einen von dem Kopfabschnitt (28a) umgebenen Endabschnitt des Spulenträgerinnenraums (30) und durch eine diesen Endabschnitt umgebenen Wandung (48) des Kopfabschnitts (28a) gebildet wird.

5. Ventil gemäß einem oder mehreren der vorhergehenden Ansprüche, **dadurch gekennzeichnet, dass** der Innenraum (30) im Bereich des Kopfabschnitts (28a) bzw. dass der von diesem umgebene Innenraum (30) größere Querabmessungen aufweist als im Bereich des Spulenabschnitts (28a) bzw. als der von dem Spulenabschnitt (28b) umgebene Innenraum (30).

6. Ventil gemäß einem oder mehreren der vorhergehenden Ansprüche, **dadurch gekennzeichnet, dass** der Spulenträger (28) aus einem metallischen Werkstoff gefertigt ist.

7. Ventil gemäß einem oder mehreren der vorhergehenden Ansprüche, **dadurch gekennzeichnet, dass** der Innenraum (30) des Spulenträgers (28) an eine mindestens bereichsweise von dem Ventilsitz (36) der Dosiereinheit (37) umgebenen Ventilkammer (58) der Dosiereinheit (37) anschließt bzw. in diese mündet.

8. Ventil gemäß einem oder mehreren der vorhergehenden Ansprüche, **dadurch gekennzeichnet, dass** der Spulenträger (28) einen Fußabschnitt (28c) mit einer (endständigen) Aufnahme (38) für die Dosiereinheit (37) aufweist, mit der die Dosiereinheit (37) insbesondere lösbar verbunden ist, insbesondere verschraubt, bevorzugt mittels eines Befestigungsteils (41) der Dosiereinheit (37), wie etwa einer (Überwurf-)Mutter.

9. Ventil gemäß Anspruch 8, **dadurch gekennzeichnet, dass** die Dosiereinheit (37) eine den Ventilsitz (36) bildende Düse (40) umfasst.

10. Ventil gemäß einem oder mehreren der vorhergehenden Ansprüche, **dadurch gekennzeichnet, dass** der Spulenträger (28), die Ventilhubeinstelleinheit (44) und die Dosiereinheit (37) derart ausgebildet und zueinander ausgerichtet sind, dass das Anschlagteil (49) der Ventilhubeinstelleinheit (44) und das Verschlussorgan (32) der Dosiereinheit (37) mittig in dem Innenraum (30) des Spulenträgers (28) sowie aufeinanderfolgend entlang einer gemeinsamen (Längsmittel-)Achse positioniert sind.

11. Ventil gemäß Anspruch 10, **dadurch gekennzeichnet, dass** das Verschlussorgan (32) durch eine (hohlzylindrische) Wandung des Spulenabschnitts (28b) des Spulenträgers (28) in dem Innenraum (30) in axialer Richtung geführt ist.

12. Ventil gemäß einem oder mehreren der vorhergehenden Ansprüche, **dadurch gekennzeichnet, dass** der von der Aufnahme (45) für die Ventilhubeinstelleinheit (44) umgebene Innenraumabschnitt des Spulenträgers (28), der von dem Spulenabschnitt (28b) umgebene Innenraumabschnitt desselben und dessen von der Aufnahme (38) für die Dosiereinheit (37) umgebener Innenraumabschnitt entlang einer gemeinsamen (Längsmittel-)Achse angeordnet sind.

## Claims

1. Valve for free-flowing media, in particular a glue valve, with a valve housing (25), and with a closure member (32), in particular a valve tappet, which is movable in the valve housing (25) by means of an electromagnet and which bears with a closure piece on a valve seat in the closed position of the valve (14) and which sits at least partially in an in particular continuous interior (30) of a coil carrier (28) on which the windings of a coil (31) of the electromagnet are wound, and with a valve lift adjustment unit (44) with an elongate abutment part (49) which is arranged at least in part in the interior (30) of the coil carrier (28) and which limits a movement of the closure member (30) in the direction of the valve lift adjustment unit (44), wherein the valve lift adjustment unit (44) is secured on the coil carrier (28), wherein the coil carrier (28) has a coil portion (28b) onto which the coil (31) is wound, and also an adjoining head portion (28a) with a receiver (45) for the valve lift adjustment unit (44), wherein a medium delivery duct (56) is located in the head portion (28a) of the coil carrier (28), which medium delivery duct (56) begins on the outside of the coil carrier (28) and extends as far as the interior (20) of the coil carrier (28), and through which medium delivery duct (56) the medium to be discharged through the valve (14) can be delivered to the interior (30), **characterized in that** the coil carrier (28) is a single-piece design, and **in that** the closure member (32) and the valve seat (36) are part of a dosing unit (37) which is secured on the coil carrier (28), in particular releasably secured on the coil carrier (28), preferably by means of a screw connection.

2. Valve according to claim 1, **characterized in that** the valve lift adjustment unit (44) has an abutment part carrier which is connected to a stationary valve component and on which the abutment part (49) is secured.

3. Valve according to claim 1 or 2, **characterized in that** the coil portion (28b) and the head portion (28a) laterally surround or enclose the interior (30) of the coil carrier (28).

4. Valve according to one or more of the preceding claims, **characterized in that** the (terminal) receiver (45) for the valve lift adjustment unit (44) is formed by an end portion of the coil carrier interior (30) surrounded by the head portion (28a), and by a wall (48) of the head portion (28a) surrounding this end portion.

5. Valve according to one or more of the preceding claims, **characterized in that** the interior (30) in the area of the head portion (28a), or the interior (30) surrounded by this, has greater transverse dimensions than in the area of the coil portion (28a) or than the interior (30) surrounded by the coil portion (28b).

6. Valve according to one or more of the preceding claims, **characterized in that** the coil carrier (28) is produced from a metallic material.

7. Valve according to one or more of the preceding claims, **characterized in that** the interior (30) of the coil carrier (28) connects to or opens into a valve chamber (58) of the dosing unit (37) surrounded at least in part by the valve seat (36) of the dosing unit (37).

8. Valve according to one or more of the preceding claims, **characterized in that** the coil carrier (28) has a foot portion (28c) with a (terminal) receiver (38) for the dosing unit (37), to which the dosing unit (37) is connected in particular releasably, in particular by screwing, preferably by means of a securing part (41) of the dosing unit (37), for example a (sleeve) nut.

9. Valve according to claim 8, **characterized in that** the dosing unit (37) comprises a nozzle (40) that forms the valve seat (36).

10. Valve according to one or more of the preceding claims, **characterized in that** the coil carrier (28), the valve lift adjustment unit (44) and the dosing unit (37) are designed in such a way and oriented relative to one another in such a way that the abutment part (49) of the valve lift adjustment unit (44) and the closure member (32) of the dosing unit (37) are positioned centrally in the interior (30) of the coil carrier (28) and in succession along a common (longitudinal centre) axis.

11. Valve according to claim 10, **characterized in that** the closure member (32) is guided in the axial direction through a (hollow cylindrical) wall of the coil portion (28b) of the coil carrier (28) in the interior (30).

12. Valve according to one or more of the preceding claims, **characterized in that** the interior portion of the coil carrier (28) surrounded by the receiver (45) for the valve lift adjustment unit (44), the interior portion thereof surrounded by the coil portion (28b), and the interior portion thereof surrounded by the receiver (38) for the dosing unit (37) are arranged along a common (longitudinal centre) axis.

## Revendications

1. Vanne pour fluides coulants, notamment vanne à colle, comprenant un corps de vanne (25) et un organe de fermeture (32) pouvant être déplacé par un électroaimant, notamment un poussoir de vanne, qui adhère par une pièce de fermeture contre un siège de vanne dans la position fermée de la vanne (14) et qui repose au moins partiellement dans un espace intérieur (30) notamment ininterrompu d'un porte-bobine (28), sur lequel sont enroulées les spires d'une bobine (31) de l'électroaimant, et comprenant une unité de réglage de course de vanne (44) pourvue d'une partie de butée (49) allongée, disposée au moins par portions dans l'espace intérieur (30) du porte-bobine (28) et limitant un mouvement de l'organe de fermeture (30) en direction de l'unité de réglage de course de vanne (44), l'unité de réglage de course de vanne (44) étant fixée au porte-bobine (28), le porte-bobine (28) possédant une portion de bobine (28b) sur laquelle est enroulée la bobine (31), ainsi qu'une portion de tête (28a) rattachée à celle-ci et pourvue d'un logement (45) pour l'unité de réglage de course de vanne (44), un canal d'acheminement de fluide (56), à travers lequel le fluide à délivrer par la vanne (14) peut être acheminé à l'espace intérieur (30), se trouvant dans la portion de tête (28a) du porte-bobine (28) et commence au niveau de son côté extérieur en suivant un tracé jusqu'à l'espace intérieur (20) du porte-bobine (28), **caractérisée en ce que** le porte-bobine (28) est réalisé d'un seul tenant, et **en ce que** l'organe de fermeture (32) et le siège de vanne (36) font partie d'une unité de dosage (37) qui est fixée au porte-bobine (28), notamment fixée de manière amovible au porte-bobine (28), de préférence au moyen d'un assemblage vissé.

2. Vanne selon la revendication 1, **caractérisée en ce que** l'unité de réglage de course de vanne (44) dispose d'un porte-partie de butée, relié à un composant de vanne en position fixe et auquel est fixée la partie de butée (49) .

3. Vanne selon la revendication 1 ou 2, **caractérisée en ce que** la portion de bobine (28b) et la portion de tête (28a) entourent ou confinent latéralement l'espace intérieur (30) du porte-bobine (28).

4. Vanne selon une ou plusieurs des revendications précédentes, **caractérisée en ce que** le logement (45) (terminal) pour l'unité de réglage de course de vanne (44) est formé par une portion d'extrémité de l'espace intérieur de porte-bobine (30) entouré par la portion de tête (28a) et par une paroi (48) de la portion de tête (28a) qui entoure cette portion d'extrémité.

5. Vanne selon une ou plusieurs des revendications précédentes, **caractérisée en ce que** l'espace intérieur (30) dans la zone de la portion de tête (28a), ou **en ce que** l'espace intérieur (30) entouré par celle-ci possède des dimensions transversales plus grandes que dans la zone de la portion de bobine (28a) ou que l'espace intérieur (30) entouré par la portion de bobine (28b).

6. Vanne selon une ou plusieurs des revendications précédentes, **caractérisée en ce que** le porte-bobine (28) est fabriqué en un matériau métallique.

7. Vanne selon une ou plusieurs des revendications précédentes, **caractérisée en ce que** l'espace intérieur (30) du porte-bobine (28) se raccorde à une chambre de vanne (58) de l'unité de dosage (37) qui est au moins partiellement entourée par le siège de vanne (36) de l'unité de dosage (37), ou débouche dans celle-ci.

8. Vanne selon une ou plusieurs des revendications précédentes, **caractérisée en ce que** le porte-bobine (28) possède une portion de pied (28c) pourvue d'un logement (38) (terminal) pour l'unité de dosage (37), auquel est reliée l'unité de dosage (37), notamment de manière amovible, notamment vissée, de préférence au moyen d'une partie de fixation (41) de l'unité de dosage (37), par exemple un écrou (d'accouplement).

9. Vanne selon la revendication 8, **caractérisée en ce que** l'unité de dosage (37) comporte une buse (40) qui forme le siège de vanne (36).

10. Vanne selon une ou plusieurs des revendications précédentes, **caractérisée en ce que** le porte-bobine (28), l'unité de réglage de course de vanne (44) et l'unité de dosage (37) sont configurés et orientés les uns par rapport aux autres de telle sorte que la partie de butée (49) de l'unité de réglage de course de vanne (44) et l'organe de fermeture (32) de l'unité de dosage (37) sont positionnés au centre dans l'espace intérieur (30) du porte-bobine (28) ainsi que l'un à la suite de l'autre le long d'un axe (central longitudinal) commun.

11. Vanne selon la revendication 10, **caractérisée en ce que** l'organe de fermeture (32) est guidé dans la direction radiale dans l'espace intérieur (30) par une paroi (cylindrique creuse) de la portion de bobine (28b) du porte-bobine (28).

12. Vanne selon une ou plusieurs des revendications précédentes, **caractérisée en ce que** la portion d'espace intérieur du porte-bobine (28) qui est entourée par le logement (45) pour l'unité de réglage de course de vanne (44), la portion d'espace intérieur de celui-ci qui est entourée par la portion de bobine (28b) et sa portion d'espace intérieur qui est entourée par le logement (38) pour l'unité de dosage (37) sont disposées le long d'un axe (central longitudinal) commun.
